# EUROPEAN PATENT APPLICATION

(11) **EP 4 786 140 A1**
(43) Date of publication of application: **05.08.2026**
(21) Application number: 24872288.6
(22) Date of filing: 25.09.2024
(51) Int. Cl.: B29C 49/78, B29C 49/06, B29C 49/64

(54) **BLOW MOLDING DEVICE AND METHOD FOR CONTROLLING BLOW MOLDING DEVICE**

(30) Priority: 28.09.2023 JP 2023168799
(71) Applicant: Nissei ASB Machine Co., Ltd., Komoro-shi, Nagano 384-8585 (JP)
(72) Inventor: OGIHARA, Hiroki, Komoro-shi, Nagano 384-8585 (JP); TAKEUCHI, Mikako, Komoro-shi, Nagano 384-8585 (JP); HIDAKA, Yasuhiro, Komoro-shi, Nagano 384-8585 (JP)
(74) Representative: Mewburn Ellis LLP
(86) International application number: PCT/JP2024/034208
(87) International publication number: WO 2025/070502

(57) **Abstract**

A blow molding apparatus according to the present invention includes an injection molding unit that injection-molds a preform made of resin, a cooling unit that cools the preform after injection molding, a heating unit that heats the preform cooled, and a blow molding unit that blow-molds the preform after heating. The blow molding apparatus further includes a preform unloading unit that is configured to be able to unload the preform before being heated to an outside, and a control unit that performs control so that an operation mode of the blow molding apparatus is switched between a normal operation mode and a preform unloading mode. In the normal operation mode, control is performed so that the preform injection-molded is moved to the blow molding unit via the cooling unit and the heating unit and blow-molded, and in the preform unloading mode, control is performed so that the preform injection-molded is unloaded from the preform unloading unit to the outside.

## Description

### Technical Field

The present invention relates to a blow molding apparatus and a method for controlling a blow molding apparatus.

### Background Art

Conventionally, as a blow molding apparatus for a resin container, one having a method referred to as a 1-stage method or a hot parison method and one having a method referred to as a 2-stage method or a cold parison method are known.

The 1-stage method is a molding method in which injection molding of a preform and blow molding of a container are collectively processed in a single molding machine. In this method, the preform injection-molded in an injection molding unit is blow-molded while maintaining the heat retained at the time of injection molding, and thus there is an advantage that energy waste is reduced and only one apparatus is required.

On the other hand, the 2-stage method is a molding method in which a preform injection molding apparatus and a container blow molding apparatus are separately provided, and injection molding of a preform and blow molding thereof are performed offline (in separate apparatuses, so that the respective molding processes are performed discontinuously). The preform injection-molded in the injection molding apparatus is stocked as an intermediate stock after being naturally cooled. Thereafter, the preform stocked is supplied to the blow molding apparatus, reheated to an appropriate temperature for blow, and then blow-molded. In this method, the injection molding cycle and the blow molding cycle are independent, and it is easy to individually set the injection condition and the temperature condition. On the other hand, since the injection-molded preform needs to be cooled once and then reheated, there is a problem in terms of energy efficiency.

The present applicant has put into practical use an injection stretch blow molding apparatus called a 1.5-stage method having both the advantages of the 1-stage method and the 2-stage method (see, for example, Patent Literature 1). In the 1.5-stage method, while the heat at the time of injection molding is used as in the 1-stage method, the temperature of the preform is adjusted by reheating. Then, the temperature-adjusted preforms are divided into groups each having M preforms, less than N preforms molded in one cycle of injection molding, and blow molding of the grouped M preforms is performed as one cycle. By doing so, the production efficiency is improved while saving energy.

### Citation List

### Patent Literature

Patent Literature 1: JP 5563095 B2

### Summary of Invention

### Technical Problem

For example, in some cases, a blow molding apparatus that manufactures a bottle for beverages is used by being connected to external apparatuses that perform respective processes of an inspection after manufacturing of the bottle, filling of contents, and capping, such as a bottle inspector, a bottle sterilizer, a rinser, a filler, and a capper. In operation of such an in-line (continuous) manufacturing line, the manufacturing number of the containers in the blow molding apparatus needs to match the processing number in the downstream apparatus, and in a case where the downstream apparatus has a failure or the like and stops the operation, the blow molding apparatus needs to stop the operation as well. The off-line (discontinuous) manufacturing line, in which the blow molding apparatus and the external apparatus are not connected, has high flexibility, but requires a storage apparatus, an alignment apparatus, a conveyance apparatus, or the like for molded products (containers, preforms, or the like) between processes/apparatuses, and thus requires a larger installation area than the in-line manufacturing line (area productivity decreases).

However, in the case of the 1.5-stage-method blow molding apparatus, when the operation is once stopped and then restarted, it is necessary to readjust the settings of the injection molding condition, the heating condition, the conveyance condition, the blow molding condition, and the like, and such readjustment requires a certain amount of time. In fact, since this readjustment needs to be performed while operating the apparatus, the preform injection-molded before the adjustment is completed often has to be discarded due to a molding failure or the like, and there is a problem that waste of the resin material occurs. In particular, in the 1.5-stage-method blow molding apparatus, the number of preforms manufactured per injection molding is larger than that in the 1-stage-method apparatus, and thus the number of preforms discarded in such a case tends to be large.

The present invention has been made in view of such problems, and an object of the present invention is to reduce the number of preforms discarded during adjustment work of a 1.5-stage-method blow molding apparatus.

### Solution to Problem

An aspect of the present invention is a blow molding apparatus including an injection molding unit that injection-molds a preform made of resin, a cooling unit that cools the preform to a predetermined temperature, the preform having heat retained during injection molding, a heating unit that continuously conveys and heats the preform cooled, and a blow molding unit that blow-molds the preform after heating to manufacture a container made of resin. The blow molding apparatus further includes a preform unloading unit that is configured to be able to unload the preform before being heated by the heating unit to an outside, and a control unit that performs control so that an operation mode of the blow molding apparatus is switched between a normal operation mode and a preform unloading mode. In the normal operation mode, control is performed so that the preform injection-molded is moved to the blow molding unit via the cooling unit and the heating unit and blow-molded, and in the preform unloading mode, control is performed so that the preform injection-molded is unloaded from the preform unloading unit to the outside.

### Advantageous Effects of Invention

According to an aspect of the present invention, it is possible to reduce the number of preforms discarded during adjustment work of a 1.5-stage-method blow molding apparatus.

### Brief Description of Drawings

Fig. 1 is a plan view schematically illustrating a configuration of a blow molding apparatus.
Fig. 2 is a view schematically illustrating conveyance of preforms in an injection molding unit and a cooling unit.
Fig. 3 is a block diagram illustrating a configuration of a control system of the blow molding apparatus.
Fig. 4 is a flowchart illustrating processing of an operation mode switching control.
Fig. 5 is a diagram illustrating an example of an operation mode selection screen in an interface unit.

### Description of Embodiments

Hereinbelow, an embodiment of the present invention will be described with reference to the drawings.

In the embodiment, for easy understanding, structures and elements other than the main part of the present invention will be described in a simplified or omitted manner. In the drawings, the same elements are labeled with the same reference signs. Note that the shapes, dimensions, and the like of the respective elements illustrated in the drawings are schematically illustrated, and do not indicate actual shapes, dimensions, and the like.

### <Description of Blow Molding Apparatus>

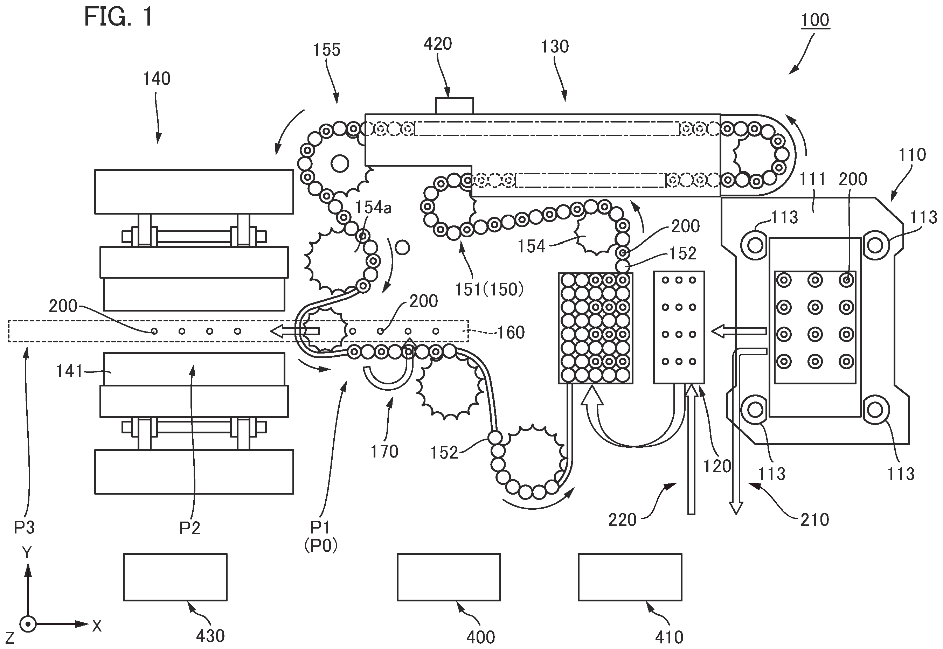

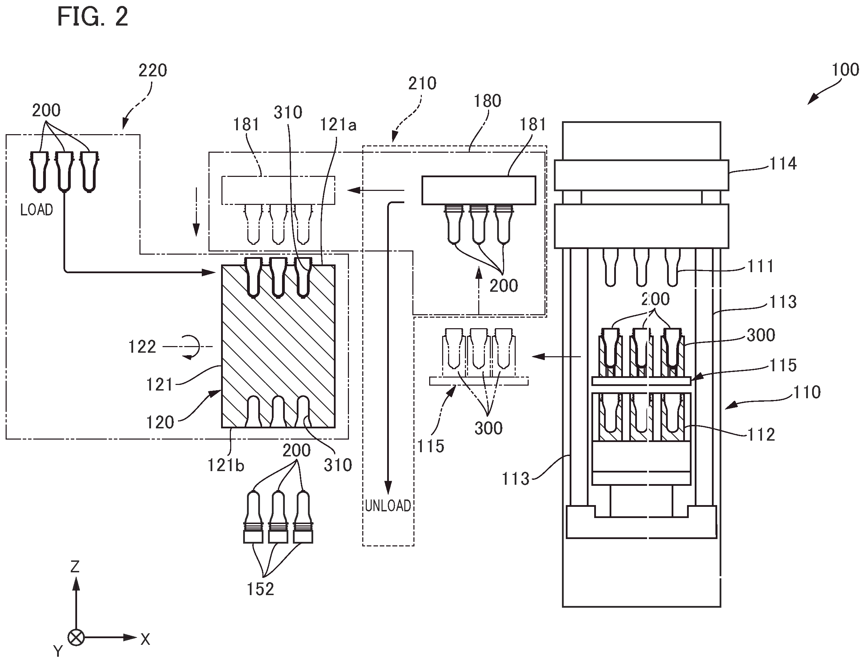

First, a blow molding apparatus 100 according to an embodiment of the present invention will be described with reference to Fig. 1. Fig. 1 is a plan view schematically illustrating a configuration of a blow molding apparatus. Fig. 2 is a view schematically illustrating conveyance of preforms in an injection molding unit and a cooling unit.

The blow molding apparatus 100 according to the present embodiment executes a blow molding method called a 1.5-stage method having advantages of both a 1-stage method (hot parison method) and a 2-stage method (cold parison method). Basically, in the 1.5-stage blow molding method, a preform having heat retained at the time of injection molding is blow-molded to manufacture a container as in the 1-stage method. However, the cycle of the blow molding in the 1.5-stage method is set to be shorter than the cycle of the injection molding of the preforms. The plurality of preforms molded in one injection molding cycle are blow-molded in a plurality of blow molding cycles.

Although not particularly limited, the ratio (N : M) of the number (N) of preforms simultaneously injection-molded and the number (M) of containers simultaneously blow-molded is set to, for example, 3 : 1.

As illustrated in Fig. 1, the blow molding apparatus 100 includes an injection molding unit 110, a cooling unit 120, a heating unit 130, and a blow molding unit 140.

The blow molding apparatus 100 further includes a continuous conveyance unit 150 that conveys a preform 200 carried out from the cooling unit 120 to the blow molding unit 140 via the heating unit 130.

The continuous conveyance unit 150 is a conveyance apparatus configured to continuously convey a conveyance jig 152 holding the preform 200 along a loop-shaped conveyance line 151 having a plurality of curved portions. That is, the continuous conveyance unit 150 can repeatedly convey each conveyance jig 152 along the loop-shaped conveyance line 151.

In addition, the blow molding apparatus 100 includes a preform unloading unit 210 capable of unloading the injection-molded preform 200 to the outside without conveying the preform to the heating unit 130, and a preform loading unit 220 capable of loading the preform 200 injection-molded in advance to the cooling unit 120 from the outside.

The blow molding apparatus 100 further includes a control unit 400 that controls switching of an operation mode of the blow molding apparatus 100 to be described below, and an interface unit 410 that receives input of an instruction to switch the operation mode from an operator of the blow molding apparatus 100(hereinbelow, it is simply referred to as an "operator").

The blow molding apparatus 100 further includes a temperature detection unit 420 capable of detecting the temperature of the heating unit 130, and an operation status detection unit 430 capable of detecting an operation status of an external apparatus (not illustrated) connected to the blow molding apparatus 100 on the downstream side of the blow molding apparatus 100.

The injection molding unit 110 injection-molds the bottomed cylindrical preform 200 that is a resin molded product.

As illustrated in Fig. 2, the injection molding unit 110 includes a neck mold (not illustrated) and a core mold 111 disposed on the upper side, a cavity mold 112 disposed on the lower side, and a clamping mechanism 114 that clamps the neck mold, the core mold 111, and the cavity mold 112 with tie bars 113. The injection molding unit 110 injection-molds the preform 200 by filling an injection space formed by the core mold 111 and the cavity mold 112 with a resin material (raw material) from an injection apparatus (not illustrated).

Here, an example of the preform 200 applied in the present embodiment will be described. The entire shape of the preform 200 is a bottomed cylindrical shape in which one end side is opened and the other end side is closed.

The raw material of the preform 200 is a thermoplastic synthetic resin, and can be appropriately selected according to the use of the container. Specific examples of the material include PET (polyethylene terephthalate), PEN (polyethylene naphthalate), PCTA (polycyclohexanedimethylene terephthalate), Tritan (registered trademark) (copolyester manufactured by Eastman Chemical Company), PP (polypropylene), PE (polyethylene), PC (polycarbonate), PES (polyethersulfone), PPSU (polyphenylsulfone), PS (polystyrene), COP/COC (cyclic olefin polymer), PMMA (polymethyl methacrylate: acrylic), and PLA (polylactic acid).

The injection molding unit 110 of the present embodiment is configured to mold, for example, 3 (rows) × N' (pieces) (N' is plural and is 4 in the example in Fig. 1. N is plural and is 12 in a case where N' = 4.) preforms simultaneously. Furthermore, in the injection molding unit 110, the preform 200 is molded and conveyed in an upright state with the neck portion provided on the opened one end side facing upward.

As illustrated in Fig. 2, the injection molding unit 110 includes a receiving unit 115 that takes out the injection-molded preform 200 to the outside of the injection molding unit 110. The receiving unit 115 is configured to be movable in a horizontal direction (X direction in the drawing) from a receiving position on the lower side of the core mold 111 to a transfer position outside a space surrounded by the tie bars 113.

The receiving unit 115 holds 12 pots 300 that accommodate 3 × 4 preforms 200 molded in the injection molding unit 110 in a one-to-one relationship. Each pot 300 is an example of a preform holding member and has a housing space corresponding to the outer shape of the preform 200.

Each pot 300 is cooled to a predetermined temperature by a refrigerant circulating in a refrigerant passage (not illustrated) provided in the receiving unit 115. In the present embodiment, the predetermined temperature is set to a temperature at which the injection-molded preform 200 can stably maintain its shape.

In addition, the receiving unit 115 includes a mechanism (not illustrated) that adjusts the pitch in the row of the pots 300 (pitch in the X direction in the drawing) during the movement from the receiving position to the transfer position. Accordingly, the receiving unit 115 converts the pitch in the row of the preforms 200 from a wide pitch state at the receiving position to a narrow pitch state at the transfer position.

The preform 200 injection-molded in the injection molding unit 110 is supplied from the injection molding unit 110 to the cooling unit 120. The cooling unit 120 forcibly cools the preform 200 molded in the injection molding unit 110. The preform 200 is carried out from the cooling unit 120 in a state of being cooled to a predetermined temperature, and is continuously conveyed along the conveyance line 151.

Note that the cooling of the preform 200 in the cooling unit 120 is performed for the purpose of eliminating variations in the temperature of the respective injection-molded preforms 200 and conveying the preforms to the heating unit 130 in a homogeneous state. That is, the preform 200 does not need to be cooled to room temperature, and is conveyed to the heating unit 130 in a state of having heat retained at the time of injection molding, so that good energy efficiency similar to that of the 1-stage method can be obtained in the present embodiment.

As illustrated in Fig. 2, a conveyance apparatus 180 that conveys the preform 200 from the receiving unit 115 to the cooling unit 120 in an upright state is provided between the injection molding unit 110 and the cooling unit 120. The conveyance apparatus 180 includes a holding unit 181 that holds the neck portion of the preform 200 in the upright state, and is configured to be able to move the holding unit 181 in the vertical direction (Z direction in the drawing) and the horizontal direction (X direction in the drawing) by a not-illustrated air cylinder.

In the present embodiment, the conveyance apparatus 180 also functions as the preform unloading unit 210. As will be described below, the conveyance apparatus 180 as the preform unloading unit 210 is configured to be movable to an unloading position (not illustrated) where the preform 200 can be unloaded to the outside via a not-illustrated unloading port when the operation mode of the blow molding apparatus 100 is set to a preform unloading mode.

As illustrated in Fig. 2, the cooling unit 120 includes an inversion unit 121. The inversion unit 121 can be inverted about an axis 122 extending in the X direction in the drawing as a rotation axis, and is configured to be movable up and down in the Z direction (up-down direction) in the drawing. A first surface 121a of the inversion unit 121 illustrated on the upper side in the drawing and a second surface 121b facing the first surface 121a are each provided with 12 cooling pots 310 that accommodate 3 × 4 preforms 200.

In the present embodiment, the inversion unit 121 also functions as the preform loading unit 220. As will be described below, the inversion unit 121 as the preform loading unit 220 is configured to be movable to a loading position (not illustrated) where the preform 200 can be loaded from the outside when the operation mode of the blow molding apparatus 100 is set to a preform loading mode.

The cooling pot 310 arranged on the first surface 121a and the second surface 121b of the inversion unit 121 is cooled by a refrigerant circulating in a refrigerant passage (not illustrated) provided in the inversion unit 121. The cooling pot 310 of the inversion unit 121 has a function of sucking and holding the accommodated preform 200.

In addition, the inversion unit 121 inverts the preform 200 in the upright state received from the conveyance apparatus 180 to an inverted state in which the neck portion faces downward during the cooling time. Then, the preform 200 in the inverted state is handed over to the conveyance jigs 152 of the continuous conveyance unit 150 arranged in a plurality of rows below the cooling unit 120. The conveyance jig 152 holding the preform 200 is sequentially conveyed along the conveyance line 151 by a driving force of a sprocket 154 or the like.

The heating unit 130 heats the preform 200 in the inverted state continuously conveyed by the continuous conveyance unit 150 to an appropriate stretching temperature. The heating unit 130 includes a plurality of heaters (not illustrated) arranged at predetermined spaces along the conveyance line 151 on both sides of the conveyance line 151. In the heating unit 130, the preform 200 in the inverted state is heated while rotating about the axial direction of the preform 200, and the entire preform 200 is uniformly heated.

Further, the blow molding apparatus 100 includes an intermittent conveyance unit 160 and a transfer unit 170 on the downstream side of the heating unit 130 in the conveyance line 151.

The intermittent conveyance unit 160 holds a plurality of (M, for example, 3) preforms 200 heated by the heating unit 130 and intermittently conveys the preforms to the blow molding unit 140. The transfer unit 170 hands over the preform 200 continuously conveyed by the continuous conveyance unit 150 from the conveyance line 151 to the intermittent conveyance unit 160.

In the present embodiment, a plurality of (M') conveyance jigs 152 continuous in the conveyance direction are connected by a connection member (not illustrated) and unitized (integrated). The plurality (M') indicates a number of M or more, and examples thereof include 8, 9, and 12. In a case where the size of the preform 200 or the container is large (for example, a container having a capacity of 12 liters or more or a preform thereof), the preform 200 may be arranged per 1 to 3 conveyance jigs 152 unitized as described above. Then, the continuous conveyance unit 150 repeats driving and stopping of a sprocket 154a on the conveyance line 151 on the downstream side of a curved conveyance unit 155 curved at a predetermined radius, thereby supplying a plurality of (M, for example, 3 or 4) preforms 200 to the transfer unit 170 at a time.

The transfer unit 170 includes a not-illustrated inversion apparatus at a transfer position P0. The preform 200 conveyed in the inverted state along the conveyance line 151 is inverted in the inversion apparatus arranged on the upper side of the preform 200 at the transfer position P0 to be in the upright state. In addition, the transfer unit 170 includes, for example, a lifting apparatus (not illustrated) that lifts and lowers the inversion apparatus, and hands over the preform 200 in the upright state to the intermittent conveyance unit 160 in a state of lifting the preform to a predetermined position (transfer position P1).

The intermittent conveyance unit 160 grips the neck portion of each preform 200 in the upright state with an openable and closable blow conveying chuck member (not illustrated) provided in the intermittent conveyance unit 160. The blow conveying chuck member grips the neck of the preform 200 at the transfer position P1 located above the transfer position P0, and moves the preform 200 from the transfer position P1 to a blow molding position P2. By doing so, the plurality of preforms 200 are conveyed to the blow molding unit 140 at predetermined spaces.

The blow molding unit 140 includes a blow cavity mold 141 that is a pair of split molds corresponding to the shape of the container, and an air introduction member (not illustrated) that also serves as a stretching rod. In the blow molding unit 140, a predetermined number of preforms 200 received by the intermittent conveyance unit 160 from the transfer unit 170 are conveyed to the blow cavity mold 141, and the preforms 200 are subjected to stretch blow molding in the blow cavity mold 141 to manufacture containers.

The container manufactured in the blow molding unit 140 is conveyed to a container taking-out position P3 (taking-out portion) outside the blow molding unit 140 by the intermittent conveyance unit 160.

The preform unloading unit 210 includes the above-described conveyance apparatus 180 and a not-illustrated unloading port. The operation of the preform unloading unit 210 is controlled by the control unit 400. As will be described below, when the operation mode of the blow molding apparatus 100 is switched to the preform unloading mode, the conveyance apparatus 180 moves the preform 200 received from the receiving unit 115 to the unloading position described above instead of handing over the preform to the cooling unit 120. Thereafter, the preform unloading unit 210 unloads the preform 200 to the outside of the blow molding apparatus 100 via the unloading port.

The unloading port is provided with a safety door, and the safety door can be opened only when the operation mode of the blow molding apparatus 100 is switched to the preform unloading mode and the conveyance apparatus 180 is moved to the unloading position.

The preform loading unit 220 includes the above-described inversion unit 121 and a not-illustrated loading port. The operation of the preform loading unit 220 is controlled by the control unit 400. As will be described below, when the operation mode of the blow molding apparatus 100 is switched to the preform loading mode, the inversion unit 121 moves to the loading position described above. The operator or the preform loading apparatus can load the preform 200 injection-molded in advance to the inversion unit 121 moved to the loading position via the loading port. The preform 200 is loaded by being manually or mechanically inserted into the cooling pot 310 of the inversion unit 121.

The loading port is provided with a safety door, and the safety door can be opened only when the operation mode of the blow molding apparatus 100 is switched to the preform loading mode and the inversion unit 121 is moved to the loading position.

The interface unit 410 includes an input unit (not illustrated) that receives operation input from the operator, and a display unit (not illustrated) that displays various settings and an operation state of the blow molding apparatus 100 to the operator.

The input unit is, for example, a touch panel, an input button, or the like that receives operation input from the operator. When the operator inputs an instruction or the like using the input unit, the interface unit 410 receives the instruction or the like from the operator.

The display unit is, for example, a display device such as a liquid crystal display panel or an organic EL display panel. The display unit displays a predetermined screen under the control of the control unit 400 described below. Note that the interface unit 410 may have a structure in which a display unit and an input unit are integrated like a touch panel, for example.

As will be described below, the interface unit 410 is configured to transmit an operation mode switching instruction input by the operator to the control unit 400.

The temperature detection unit 420 is a temperature sensor that is provided in the vicinity of the heating unit 130 and detects the temperature in the vicinity of the outlet of the heating unit 130. The temperature detection unit 420 is configured to transmit information indicating the detected temperature of the heating unit 130 to the control unit 400.

The operation status detection unit 430 receives, from an external apparatus (not illustrated) connected to the blow molding apparatus 100 on the downstream side of the blow molding apparatus 100, a signal indicating an operation status of the external apparatus, and transmits the signal to the control unit 400.

Here, the external apparatus connected to the blow molding apparatus 100 is, for example, an apparatus that performs each process of an inspection of a resin container manufactured by the blow molding apparatus 100, cleaning thereof, filling of contents (for example, beverages) filled in the container, or capping. The external apparatuses can be, for example, a bottle inspector, a bottle sterilizer, a rinser, a filler, and a capper.

The operation status detection unit 430 is configured to be able to detect an abnormality of the external apparatus when the abnormality occurs in the external apparatus, for example, when the operation of the external apparatus is stopped due to a failure at a part of the external apparatus.

Note that the control unit 400 may have a function of the operation state detection unit to directly receive a signal related to an operation status of the external apparatus.

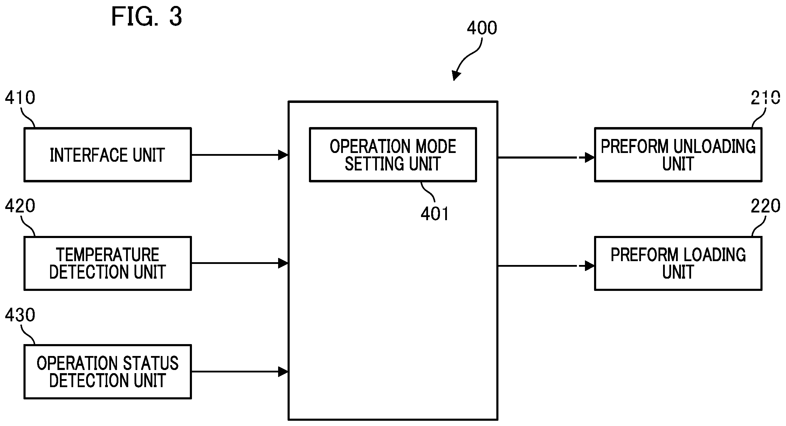

Fig. 3 illustrates a configuration example of a control system of the blow molding apparatus 100. The control unit 400 is configured as an information processing device such as a microcomputer including a CPU, a RAM, a ROM, an I/O interface (all not illustrated), and the like.

The control unit 400 reads and executes a program stored in the RAM or the ROM to comprehensively control the operation of the blow molding apparatus 100 and implement a function as an operation mode setting unit 401.

The control unit 400 receives a signal indicating the operation mode switching instruction from the interface unit 410, a signal indicating the temperature of the heating unit 130 from the temperature detection unit 420, and a signal indicating the operation status of the external apparatus from the operation status detection unit 430.

Based on these signals received by the control unit 400, the operation mode setting unit 401 executes operation mode switching control for switching and setting the operation mode of the blow molding apparatus 100 to any one of a normal operation mode, the preform unloading mode, and the preform loading mode under a predetermined condition to be described below.

### <Description of Operation Mode Switching Control>

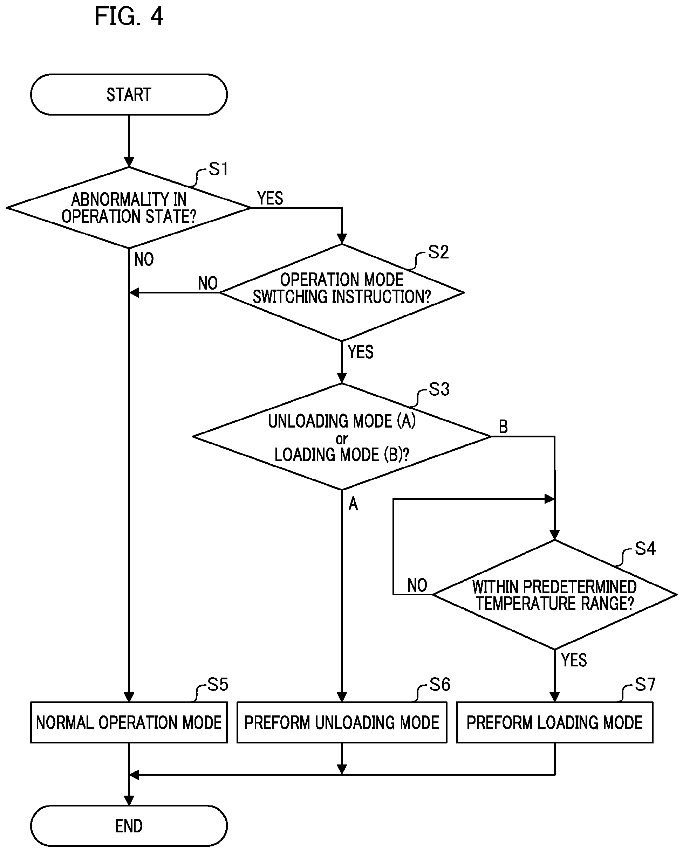

Each piece of processing of the operation mode switching control by the operation mode setting unit 401 will be described with reference to Fig. 4. Fig. 4 is a flowchart illustrating processing of the operation mode switching control according to the present embodiment. The present processing may be automatically and repeatedly executed at predetermined time intervals in the normal operation state of the blow molding apparatus 100, or may be executed in response to the operator's operation of the interface unit 410 when the production line is abnormal.

In step 1 (illustrated as "S1" in the figure, the same applies hereinbelow), the operation mode setting unit 401 determines whether or not an abnormality has occurred in the operation status of the blow molding apparatus 100. This determination is made based on, for example, a signal indicating the temperature of the heating unit 130 detected by the temperature detection unit 420 or a signal indicating the operation status of the external apparatus detected by the operation status detection unit 430.

In the determination using the information about the temperature of the heating unit 130, for example, in a case where the detected temperature of the heating unit 130 is not within a predetermined temperature range, it is determined that an abnormality has occurred. The predetermined temperature range can be set as a temperature range in which the temperature of the preform 200 conveyed through the heating unit 130 can be raised to a temperature suitable for subsequent blow molding, and can be set to, for example, 70 to 110°C. The predetermined temperature range can be appropriately changed according to the design of the temperature condition of the preform 200 before being conveyed to the heating unit 130.

In a case where the determination result in step 1 is NO and it is determined that no abnormality has occurred in the operation status of the blow molding apparatus 100, the processing proceeds to step 5, the operation mode of the blow molding apparatus 100 is set to the normal operation mode under the control of the operation mode setting unit 401, and the processing ends. In the normal operation mode, as described above, the injection-molded preform 200 is conveyed to the blow molding unit 140 via the cooling unit 120 and the heating unit 130, and a resin container is manufactured by blow molding.

In a case where the determination result in step 1 is YES and it is determined that an abnormality has occurred in the operation status of the blow molding apparatus 100, the processing proceeds to step 2. In step 2, the operation mode setting unit 401 determines whether or not an operation mode switching instruction from the operator is input into the interface unit 410.

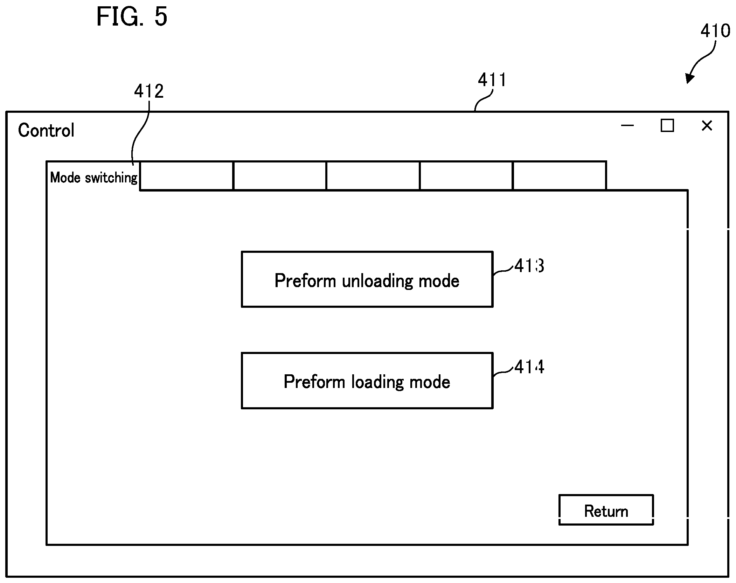

Fig. 5 is a diagram illustrating an example of an operation mode selection screen displayed on the display unit of the interface unit 410. An operation mode selection screen 411 is configured as a screen that appears when, for example, the operator selects an operation mode switching tab 412 on the setting screen displayed on the display unit.

On the operation mode selection screen 411, a preform unloading mode selecting icon 413 and a preform loading mode selecting icon 414 are displayed. The operator can input an operation mode switching instruction by selecting one of these icons 413 and 414.

In a case where the determination result in step 2 is NO and the input of the operation mode switching instruction is not confirmed, the processing proceeds to step 5, the operation mode of the blow molding apparatus 100 is set to the normal operation mode under the control of the operation mode setting unit 401, and the processing ends.

On the other hand, in a case where the determination result in step 2 is YES and the input of the operation mode switching instruction is confirmed, the processing proceeds to step 3. In step 3, it is determined whether the input operation mode switching instruction is an instruction to switch to the preform unloading mode or an instruction to switch to the preform loading mode.

Here, the preform unloading mode is an operation mode in which the preform 200 injection-molded by the injection molding unit 110 is unloaded to the outside without being conveyed to the cooling unit 120.

In a case where the preform unloading mode is selected, the conveyance apparatus 180 functioning as the preform unloading unit 210 moves the preform 200 received from the receiving unit 115 to a predetermined unloading position without handing over the preform to the cooling unit 120. Thereafter, the preform 200 is dropped to the unloading port by the conveyance apparatus 180, and the preform 200 is unloaded to the outside of the blow molding apparatus 100 via the unloading port.

As described above, the injection-molded preform 200 is cooled by the receiving unit 115 to a temperature at which the shape can be stably held. Since the preform 200 is unloaded to the outside while maintaining the shape by injection molding, the unloaded preform 200 can be stocked as an intermediate base material from which a container can be manufactured by performing blow molding afterward.

In a case where the shape and quality of the preform 200 may be deteriorated because the preform at the time of unloading is high in temperature, the preform 200 may be unloaded in a state where the preform is sufficiently cooled by changing the injection molding conditions of the preform 200 from those in the normal operation (specifically, by extending the cooling time of the injection molding conditions). The preform unloaded outside the apparatus may be additionally cooled by air cooling or the like.

In the preform unloading mode, all of the preforms 200 injection-molded in the injection molding unit 110 are unloaded to the outside without being conveyed to the cooling unit 120 by the conveyance apparatus 180. Therefore, for example, even in a case where the blow molding apparatus 100 is operated in a state where the operation condition of each unit (cooling unit 120, heating unit 130, continuous conveyance unit 150, intermittent conveyance unit 160, transfer unit 170, blow molding unit 140, and the like) on the downstream side of the conveyance apparatus 180 is not adjusted, it is possible to prevent the injection-molded preform 200 from being discarded as a defective product due to incomplete processing by setting the operating mode to the preform unloading mode.

On the other hand, the preform loading mode is an operation mode in which the preform 200 injection-molded in advance can be loaded to the cooling unit 120 from the outside of the blow molding apparatus 100.

When the preform loading mode is selected, first, the operation of each unit on the upstream side of the cooling unit 120 is stopped. Accordingly, after it is confirmed that there are no more preforms 200 sent from the conveyance apparatus 180 to the cooling unit 120, the inversion unit 121 of the cooling unit 120 moves to a predetermined loading position, and the safety door of the loading port opens. In this state, the operator can load the preform 200 injection-molded in advance into the cooling pod 310 provided on the first surface 121a of the inversion unit 121 in the upright state.

Note that the preform 200 to be loaded may be the preform 200 unloaded to the outside in the preform unloading mode, or may be the preform 200 prepared separately. In addition, the preforms 200 to be loaded preferably have no variation in temperature, and more preferably have been cooled to normal temperature.

After the preform 200 is loaded to the inversion unit 121 via the loading port, the inversion unit 121 inverts the preform 200 in the upright state to the inverted state and hands over the preform to the conveyance jig 152 of the continuous conveyance unit 150. Thereafter, the preform 200 is heated to an appropriate temperature for blow by the heating unit 130, and then molded into a container in the blow molding unit 140.

In a case where it is determined in step 3 that the input operation mode switching instruction is an instruction to switch to the preform unloading mode, in step 6, the operation mode of the blow molding apparatus 100 is switched to the preform unloading mode under the control of the operation mode setting unit 401, and this processing ends.

On the other hand, in step 3, in a case where the input operation mode switching instruction is an instruction to switch to the preform loading mode, the processing proceeds to step 4.

In step 4, the operation mode setting unit 401 determines whether or not the temperature of the heating unit 130 is within a predetermined temperature range. As described above, the predetermined temperature range is set as a temperature range in which the temperature of the preform 200 conveyed through the heating unit 130 can be raised to a temperature suitable for subsequent blow molding. The predetermined temperature range may be set to 70 to 110°C, for example, similarly to the above-described temperature range, or a different temperature range may be set for the preform loading mode. Since the preform 200 loaded in the preform loading mode is assumed to be sufficiently cooled unlike the preform 200 conveyed to the cooling unit 120 in a state of having heat retained during injection molding in the normal operation mode, the temperature range of the heating unit 130 in the preform loading mode may be set to a temperature range higher than the temperature range of the heating unit 130 in the normal operation mode.

In a case where the determination result in step 4 is NO and the temperature of the heating unit 130 is not within the predetermined temperature range, the processing stands by until the temperature of the heating unit 130 falls within the predetermined temperature range (the determination in step 4 is repeated).

In a case where the determination result in step 4 is YES and the temperature of the heating unit 130 is within the predetermined temperature range, the processing proceeds to step 7, the operation mode of the blow molding apparatus 100 is set to the preform loading mode under the control of the operation mode setting unit 401, and the processing ends.

Although the end conditions of the preform unloading mode and the preform loading mode are not illustrated in Fig. 4, these end conditions can be appropriately set. For example, the configuration is available in which an end instruction for each operation mode can be input in the interface unit 410, and in which the operation mode setting unit 401 switches the operation mode to the normal operation mode when the end instruction is input. In addition, the configuration is available in which the operation mode setting unit 401 switches the operation mode to the normal operation mode when it is confirmed that the temperature of the heating unit is within the predetermined temperature range or when it is confirmed that the external apparatus is normally operating. Alternatively, the configuration is available in which the operation mode setting unit 401 switches the operation mode to the normal operation mode on condition that a predetermined operation time has elapsed or processing of a predetermined number of preforms 200 has been completed.

Hereinbelow, effects of the present embodiment will be described.

According to the present embodiment, the blow molding machine 100 that entirely performs injection molding of the preform 200 to blow molding of the container has the normal operation mode in which the injection-molded preform 200 is moved to the blow molding unit 140 via the cooling unit 120 and the heating unit 130 and the resin container is manufactured by blow molding and the preform unloading mode in which the injection-molded preform 200 is unloaded to the outside via the preform unloading unit 210 without being sent to the cooling unit 120 so that the modes are switchable.

Therefore, in the 1.5-stage-method blow molding apparatus, for example, when the apparatus is restarted after the operation is once stopped, the operation mode can be switched to the preform unloading mode until the operation conditions of the respective units such as the cooling unit 120, the heating unit 130, the blow molding unit 140, and the continuous conveyance unit 150 are adjusted. Accordingly, it is possible to prevent the injection-molded preform 200 from being discarded as a defective product due to incomplete processing, and it is possible to store the preform 200 outside in a good state enough to enable the preform to be subjected to the blow molding processing afterward.

Therefore, it is possible to reduce the number of preforms injection-molded and then discarded during adjustment work of the 1.5-stage-method blow molding apparatus.

Further, according to the present embodiment, as the operation mode, the blow molding apparatus 100 has the preform loading mode in which the preform 200 injection-molded in advance can be loaded to the cooling unit 120 from the outside of the blow molding apparatus 100 so that the preform loading mode is switchable from another operation mode. Accordingly, the blow molding apparatus 100 of the 1.5-stage method can selectively perform the molding method according to the 2-stage method.

Therefore, for example, the preform 200 that has been unloaded to the outside of the apparatus in the preform unloading mode and stored can be loaded into the blow molding apparatus 100 again in the preform loading mode, and a resin container can be manufactured using the preform. Hence, the injection-molded preform 200 can be effectively used without wasting it.

The preform unloading mode and the preform loading mode can also be used, for example, in a manufacturing test in a case where the shape of the resin container manufactured in the blow molding apparatus 100 is changed. That is, the modes can be used in a way that the injection-molded preforms 200 are unloaded to the outside in the preform unloading mode and stocked, and an optimum operation condition is searched for by adjusting each unit while loading a small number of stocked preforms per time in the preform loading mode. As a result, the number of preforms to be discarded can be reduced as compared with a case where each unit is adjusted while the blow molding apparatus 100 is operated in the normal operation mode.

Further, in the present embodiment, since it is possible to input an operation mode switching instruction by the operator via the interface unit 410, the operation mode can be switched at a freely-selected time according to the determination of the operator. Accordingly, the operation mode can be flexibly switched according to the operation status of the blow molding apparatus 100.

In the above embodiment, the operation mode is switched when there is an abnormality in the operation state of the blow molding apparatus 100 and the operator inputs an operation mode switching instruction. However, the operation mode may be automatically switched to the preform unloading mode under a situation where the number of preforms 200 to be discarded is assumed to increase when the operation is performed in the normal operation mode, such as a case where the temperature of the heating unit is not within a predetermined range or a case where an abnormality is detected in an external apparatus connected to the downstream side of the blow molding apparatus 100.

For example, by switching to the preform unloading mode when the temperature of the heating unit is not within the predetermined range, it is possible to prevent the preform 200 whose temperature has not reached an appropriate temperature for blow from being blow-molded and discarded as a defective container.

In addition, by switching to the preform unloading mode when an abnormality is detected in the external apparatus connected to the downstream side of the blow molding apparatus 100, it is possible to prevent the container manufactured by the blow molding apparatus 100 from being discarded as a defective product due to a failure of the external apparatus on the downstream side.

The present invention is not limited to the above embodiment, and various improvements and design changes may be made without departing from the gist of the present invention.

For example, in the above embodiment, in the operation mode switching control, the operation mode is switched when the operation mode switching instruction is given by the operator after the abnormality of the operation state of the blow molding apparatus is determined on the basis of the temperature of the heating unit and the operation status of the external apparatus. However, the operation mode may be switched when the abnormality of the operation state of the blow molding apparatus is not determined but the operation mode switching instruction is given by the operator.

Further, in the above embodiment, the abnormality of the operation state of the blow molding apparatus is determined on the basis of the temperature of the heating unit and the operation status of the external apparatus. However, the abnormality of the operation state may be determined on the basis of other conditions. For example, each parameter indicating the operation state of each unit such as the cooling unit, the conveyance unit, and the blow molding unit may be acquired, and the abnormality determination may be performed on the basis of whether or not the parameter is a normal value or an appropriate value.

In a case where the temperature condition of the heating unit 130 is not used for determination of operation mode switching, the temperature detection unit 420 may be omitted. In addition, in a case where the operation state of the external apparatus is not used for determination of operation mode switching or in a case where the blow molding apparatus 100 is not used in an in-line (continuous) manufacturing line in which the apparatus is connected to the external apparatus on the downstream side, the operation state detection unit 430 may be omitted.

In the embodiment described above, the blow molding apparatus 100 can switch the operation mode among three operation modes: the normal operation mode, the preform unloading mode, and the preform loading mode. However, it is also possible to adopt a configuration capable of switching only between the normal operation mode and the preform unloading mode or between the normal operation mode and the preform loading mode. In this case as well, the advantageous effect of the preform unloading mode or the preform loading mode described above can be obtained.

Furthermore, if there is a possibility that the preform 200 cannot be heated to a temperature suitable for blow molding only by the heating unit 130 when the operation in the preform loading mode is performed, the preform 200 before loading may be placed in a not-illustrated heat retaining apparatus (temperature increasing apparatus) and heated to increase the temperature at the time of loading.

In addition, the embodiment disclosed herein is to be considered in all respects as illustrative and not restrictive. The scope of the present invention is indicated not by the above description but by the claims, and it is intended that meanings equivalent to the claims and all modifications within the scope are included.

### Reference Signs List

- 100: Blow molding apparatus
- 110: Injection molding unit
- 120: Cooling unit
- 121: Inversion unit
- 130: Heating unit
- 140: Blow molding unit
- 150: Continuous conveyance unit
- 180: Conveyance apparatus
- 200: Preform
- 210: Preform unloading unit
- 220: Preform loading unit
- 400: Control unit
- 401: Operation mode setting unit
- 410: Interface unit
- 420: Temperature detection unit
- 430: Operation state detection unit

## Claims

1. A blow molding apparatus comprising:
an injection molding unit that injection-molds a preform made of resin;
a cooling unit that cools the preform to a predetermined temperature, the preform having heat retained during injection molding;
a heating unit that continuously conveys and heats the preform cooled; and
a blow molding unit that blow-molds the preform after heating to manufacture a container made of resin,
the blow molding apparatus further comprising:
a preform unloading unit that is configured to be able to unload the preform before being heated by the heating unit to an outside; and
a control unit that performs control so that an operation mode of the blow molding apparatus is switched between a normal operation mode and a preform unloading mode,
wherein, in the normal operation mode, control is performed so that the preform injection-molded is moved to the blow molding unit via the cooling unit and the heating unit and blow-molded, and
wherein, in the preform unloading mode, control is performed so that the preform injection-molded is unloaded from the preform unloading unit to the outside.

2. The blow molding apparatus according to claim 1, further comprising
a preform loading unit that is configured to be able to load the preform injection-molded in advance into the cooling unit from the outside,
wherein the control unit executes control so that the operation mode is switched among the normal operation mode, the preform unloading mode, and a preform loading mode, and
wherein, in the preform loading mode, control is performed so that the preform loaded into the cooling unit via the preform loading unit is continuously conveyed and heated in the heating unit, and then blow-molded in the blow molding unit.

3. A blow molding apparatus comprising:
an injection molding unit that injection-molds a preform made of resin;
a cooling unit that cools the preform to a predetermined temperature, the preform having heat retained during injection molding;
a heating unit that continuously conveys and heats the preform cooled; and
a blow molding unit that blow-molds the preform after heating to manufacture a container made of resin,
the blow molding apparatus further comprising:
a preform loading unit that is configured to be able to load the preform injection-molded in advance into the cooling unit from an outside; and
a control unit that performs control so that an operation mode of the blow molding apparatus is switched between a normal operation mode and a preform loading mode,
wherein, in the normal operation mode, control is performed so that the preform injection-molded is moved to the blow molding unit via the cooling unit and the heating unit and blow-molded, and
wherein, in the preform loading mode, control is performed so that the preform loaded into the cooling unit via the preform loading unit is continuously conveyed and heated in the heating unit, and then blow-molded in the blow molding unit.

4. The blow molding apparatus according to claims 1 to 3, further comprising
an interface unit that is configured to be able to receive a switching instruction for the operation mode,
wherein the control unit switches the operation mode according to the switching instruction input.

5. The blow molding apparatus according to claim 1 or 2, further comprising
a temperature detection unit that can detect a temperature of the heating unit,
wherein the control unit sets the operation mode to the normal operation mode in a case where the temperature detected is within a predetermined temperature range set in advance, and sets the operation mode to the preform unloading mode in a case where the temperature detected is not within the predetermined temperature range.

6. The blow molding apparatus according to claim 1 or 2, further comprising
an operation status detection unit that can detect an operation status of an external apparatus connected to the blow molding apparatus on a downstream side of the blow molding apparatus,
wherein the control unit sets the operation mode to the preform unloading mode in a case where the operation status detected indicates an abnormality of the external apparatus.

7. A method for controlling a blow molding apparatus including:
an injection molding unit that injection-molds a preform made of resin;
a cooling unit that cools the preform to a predetermined temperature, the preform having heat retained during injection molding;
a heating unit that continuously conveys and heats the preform cooled; and
a blow molding unit that blow-molds the preform after heating to manufacture a container made of resin, the method comprising:
performing control so that an operation mode of the blow molding apparatus is switched between a normal operation mode and a preform unloading mode;
in the normal operation mode, performing control so that the preform injection-molded is moved to the blow molding unit via the cooling unit and the heating unit and blow-molded; and
in the preform unloading mode, performing control so that the preform injection-molded is unloaded from a preform unloading unit to the outside before heating is performed by the heating unit.
